Europäisches Patentamt

European Patent Office

Office européen des brevets

(19)

(11) EP 1 221 794 A1

(12) EUROPEAN PATENT APPLICATION

(43) Date of publication:
10.07.2002 Bulletin 2002/28

(51) Int Cl.7: H04L 27/26

(21) Application number: 01400024.4

(22) Date of filing: 05.01.2001

(84) Designated Contracting States:
AT BE CH CY DE DK ES FI FR GB GR IE IT LI LU
MC NL PT SE TR
Designated Extension States:
AL LT LV MK RO SI

(71) Applicant: ALCATEL
75008 Paris (FR)

(72) Inventors:
• Pollet, Thierry
B-2800 Mechelen (BE)

• van den Dorpe, Luc
B-1348 Louvain.La-Neuve (BE)
• Cuvelier, Laurent
B-1450 Gentinnes (BE)
• Peeters, Miguel
B-1200 Brussels (BE)

(74) Representative:
Narmon, Gisèle Marie Thérèse et al
Alcatel Bell N.V.,
Francis Wellesplein 1
2018 Antwerpen (BE)

(54) **Method and arrangement to determine a clock timing error in a multi-carrier transmission system**

(57)    The invention relates to a reception arrangement for receiving multicarrier symbols, each multicarrier symbol ($S_1$, $S_2$, $S_3$) comprising a plurality of single carrier symbols, each symbol modulating a respective carrier frequency ($f_1$, $f_2$, $f_3$). The single carrier symbols are transmitted simultaneously. The arrangement comprises means for detecting phase error of each single carrier and means for correcting the phase of a sampling clock (52) in view of the estimated error.

The means for estimating phase error comprise means ($58_1$ ... $58_N$, 24, 40) for determining a parameter êi for a carrier fi according to the following formula:

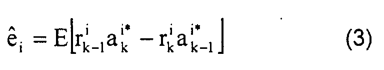

wherein $r_k^i$ is the detected signal for the single carrier at a time t, $a_k^i$ is the corresponding symbol at the same time t, $a_{k-1}^i$ and $r_{k-1}^i$ correspond, respectively, to $a_k^i$ and $r_k^i$ at time t-NT, NT being the duration of transmission of a multicarrier symbol, and E[ ] means an average value on several successive symbols.

$$\hat{e}_i = E\left[r_{k-1}^i a_k^{i*} - r_k^i a_{k-1}^{i*}\right] \qquad (3)$$

FIG_1a

**EP 1 221 794 A1**

FIG_3

Timing error estimation

**Description**

The invention relates to a method and an arrangement to determine a clock timing error in a multicarrier transmission system.

In a multicarrier transmission system, such as a discrete multitone (DMT) transmission system, an information symbol is transmitted simultaneously on several modulated carriers.

Accurate timing information must be known to the receiver in order to produce reliable estimates of the transmitted information sequence. A synchronizer determines which samples of the received signal are to be presented to a decision device. Usually, the timing information is not a priori known to the receiver and can be extracted from the received signal. For transmission over an ideal channel, the received signal is a delayed version of the transmitted signal (due to the transmission delay introduced by the transmission channel). This delay, together with the difference in symbol clock (phase) between transmitter and receiver is estimated by a synchronizer unit.

When signals are transmitted over a dispersive channel, equalization may be performed by the receiver essentially with the purpose to reverse the effect of the channel.

In order to estimate this timing error in a multicarrier transmission system, a common method applied to DMT uses a data-aided algorithm wherein the sampling clock is first roughly synchronized and, at least for one tone or carrier, the position, in the complex plane, of the detected symbol is compared with the position in this plane of the signal at the input of the decision device, and this comparison provides a phase error which is used for correction.

This estimation may be performed either on one single pilot carrier or, in order to reduce the noise of the estimation and the tracking range, on a combination of pilot carriers.

The method and the arrangement according to the invention provide an alternative which can be used for DMT transmission where the cyclic prefix is absent or for other types of multi carrier transmission (e.g. multi-carrier systems based on filter banks).

The arrangement according to the invention is characterized in that for timing error correction on the receiving side of a multicarrier data, it comprises, for at least one, and preferably, a plurality of carriers, a Mueller and Müller timing error estimator.

Such Mueller and Müller timing error estimation is already known in the art, for instance in single carrier transmission synchronizers wherein the cascade of the baseband equivalent of the impulse response of the transmit shaping filter and the receiver filter impulse response is a Nyquist pulse.

According to this method, the filtered version of the timing error estimate, e, which is used for timing correction has the following value:

$$e = E\left[ r_{k-1} a^*_k - r_k a^*_{k-1} \right] \qquad (1)$$

In this formula :

$r_k$ is the measured complex value of the signal at the input of a decision device at a given time $t_k$ of a sampling clock which is roughly synchronized,

$a_k$ is the complex value of a symbol to be estimated from $r_k$

$r_{k-1}$ and $a_{k-1}$ correspond to, respectively, $r_k$ and $a_k$ but at a time $t_k$-NT, where NT is the symbol period,

$a^*_k$ and $a^*_{k-1}$ are the complex conjugate values of, respectively, $a_k$ and $a_{k-1}$, and,

$E[ ]$ represents the average of the value between brackets on a given plurality of successive values of k, i.e. at times t-nNT, ..., t, t+NT, t+2NT, ..., t+nNT.

This method provides an error signal which varies in function of the symbol timing error according to a S curve which is particularly suitable for correction. The particular shape of the S curve depends on the shape of the transmitted pulse and on the receiver filters.

In multicarrier transmission e must be multiplied with $\alpha$ ($\alpha$=-1 , $\alpha$=1) such that when the product $\alpha e$ is used in a feedback synchroniser system, a stable timing locked loop is obtained. The value $\alpha$ depends on the carrier-index.

In a preferred embodiment, the timing error is estimated by the calculation of the parameter $\hat{e}_i$ for all the carriers, the multicarrier timing error signal being a weighted average of the values of said $\hat{e}_i$ parameters, the weighting coefficient of each $\hat{e}_i$ parameter depending on the carrier frequency. This weighting coefficient depends for instance of the quality of transmission of the corresponding single carrier channel and/or of the signal to noise ratio of the corresponding transmission channel.

If, for example, the method is applied to the transmission of a DMT signal, with N modulated carriers, the signal s(t) at the output of the transmitter is given by

$$s(t) = \sum_{k=-\infty}^{-\infty} \sum_{m=0}^{2N-1} \sum_{n=0}^{2N-1} a_m^k \cdot p\left(t - \frac{n.T}{2} - k.2N.\frac{T}{2}\right) \cdot e^{j \cdot \frac{2\pi}{2N} \cdot m.n}$$

wherein:

N is the number of carriers in the DMT signal, i.e. 256 in an ADSL system;
$a_k^m$ is the symbol modulating the mth carrier in the kth DMT symbol period with a variance equal to 1;
p(t) is the transmitted pulse for each sample, with p(t) = 1 for $0 \le t \le T/2$, and p(t)=0 elsewhere;
t is the time;
$\frac{2}{T}$ is the sampling rate;
n is a sample index;
m is a carrier index;
k is a DMT symbol index;
j is the square root of -1;
$\pi$ = 3.1415;
$\infty$ is the usual symbol representing infinity.

For a timing error ($\tau_e$), the signal at the input of the decision device for carrier m at t=$\tau_e$ (not taking into account the contributions of signals transmitted over carriers other than m) is:

$$r_k(t) = \sum_{k=-\infty}^{-\infty} \sum_{n=-2N}^{2N} a_m^k \cdot (2N - |n|) g\left(\tau_e - \frac{n.T}{2} - k.2N.\frac{T}{2}\right) \cdot e^{j \cdot \frac{2\pi}{2N} \cdot m.n}$$

where

$$g(t) = \begin{cases} T/2 - |t| & |t| \le T/2 \\ 0 & elsewhere \end{cases}$$

The Mueller and Müller timing error estimation applied to carrier m provides a term proportional to

$$\tau_e \, e^{j \cdot \frac{2\pi}{2N} \cdot m}.$$

The imaginary part of this term can be used as estimate of the timing error $\tau_e$.

In a preferred embodiment, each error signal e; is weighted according to the quality of transmission of the corresponding channel. In fact, each carrier is considered as transmitted on a channel which is distinct from the channel transmitting another carrier, and the quality of transmission may differ from one channel to the other. In that case, greater weights are given to transmissions having the best qualities and smaller weights are given to transmissions having the lowest qualities. In an embodiment, the weight given to each carrier channel is the signal to noise ratio (SNR). In brief the invention provides a reception arrangement for receiving multicarrier symbols, each multicarrier symbol ($S_1$, $S_2$, $S_3$) comprising a plurality of single carrier symbols, each single carrier symbol modulating a respective carrier frequency ($F_1$, $F_2$, $F_3$), these single carrier symbols being transmitted simultaneously, the reception arrangement comprising means for detecting the time, or phase error, of at least one single carrier and means for correcting the phase of a sampling clock in view of the estimated timing error, wherein the means for estimating the timing or phase error comprise, at least for one carrier, means ($58_i$ ... $58_N$, 24, 40) for determining a parameter $\hat{e}_i$ for a carrier $f_i$, or a quantity proportional to the parameter $\hat{e}_i$, according to the following formula:

$$\hat{e}_t = E\left[r_{k-1}^i a_k^{i\bullet} - r_k^i a_{k-1}^{i\bullet}\right] \qquad\qquad (3)$$

wherein $r_k^i$ is the detected signal for the single carrier at a time t, $a_k^i$ is the corresponding single carrier symbol at the same time t, $a_{k-1}^i$ and $r_{k-1}^i$ correspond, respectively, to $a_k^i$ and $r_k^i$ at time t-NT, NT being the duration of transmission of a multicarrier symbol, and E[] means an average value on several successive symbols.

Other features and advantages of the invention will appear with the description of certain of its embodiments, this description being made with reference to the herein happened drawings wherein:

Figures. 1a, 1b, 1c are diagrams illustrating schematically the principle of discrete multitone transmission,
Figure. 2 shows a multicarrier modulator, a transmission channel and a multicarrier demodulator,
Figure. 2a shows with more details a part of the arrangement of figure 2,
Figure. 3 illustrates a synchronizer for multicarrier transmission according to the invention, and
Figure. 4 shows an element of the synchroniser shown on figure 3.

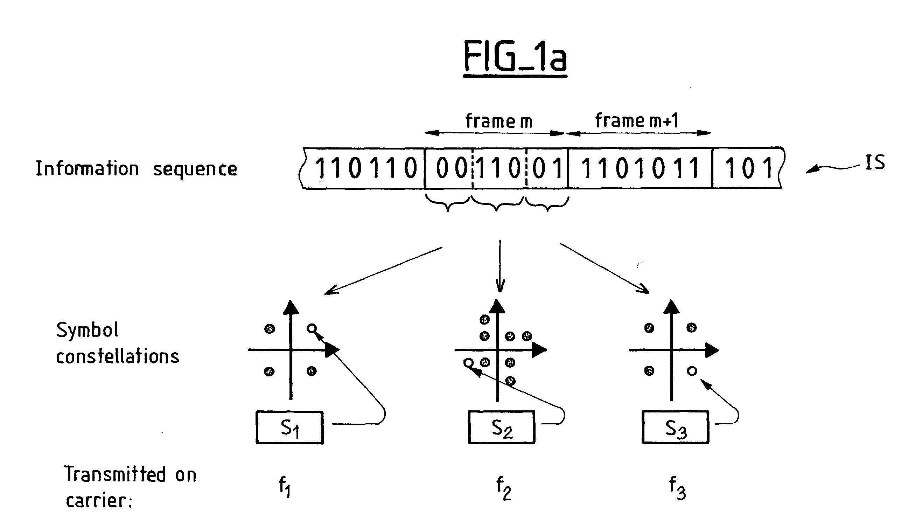

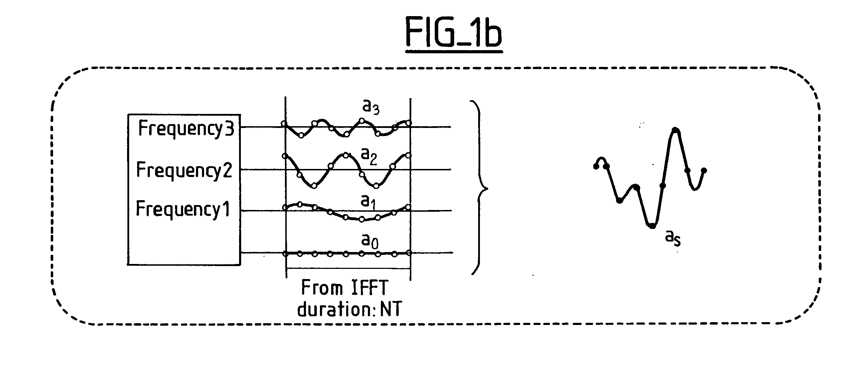

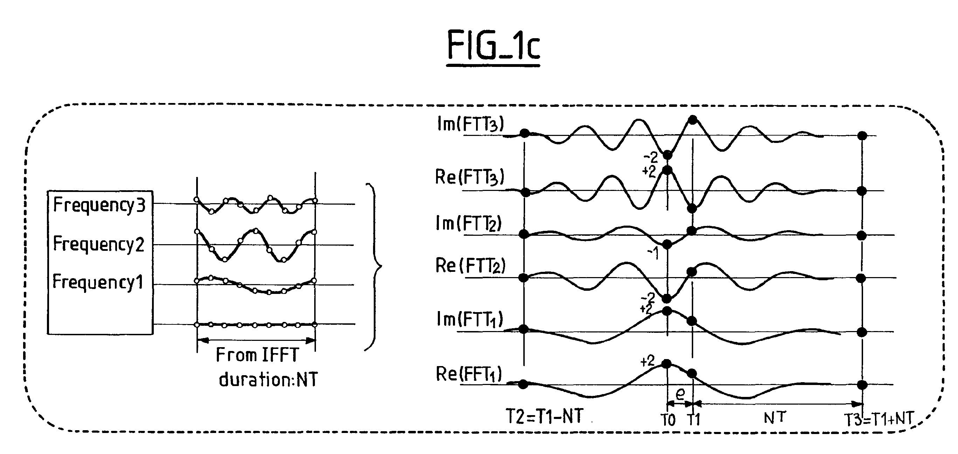

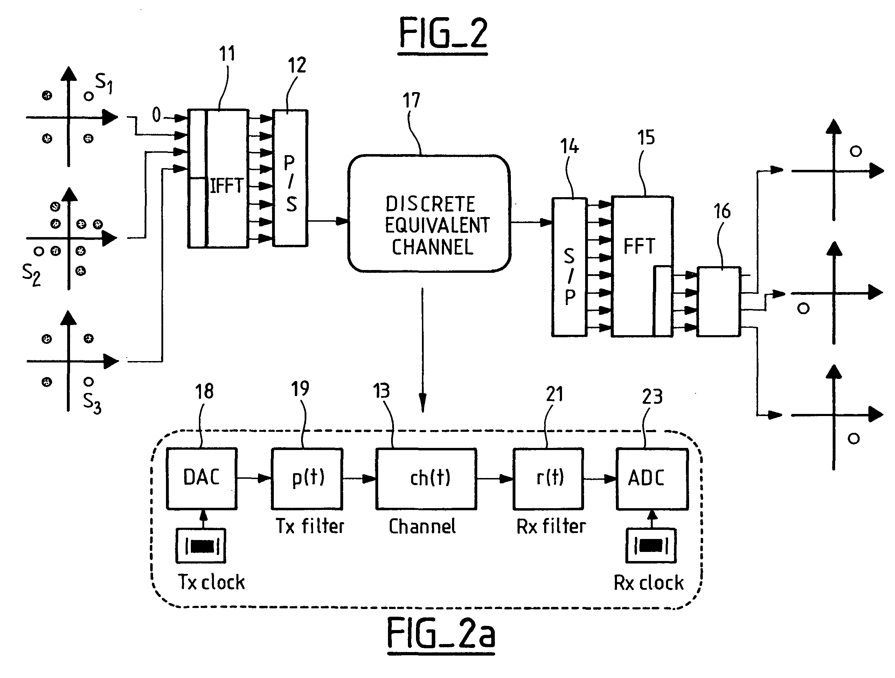

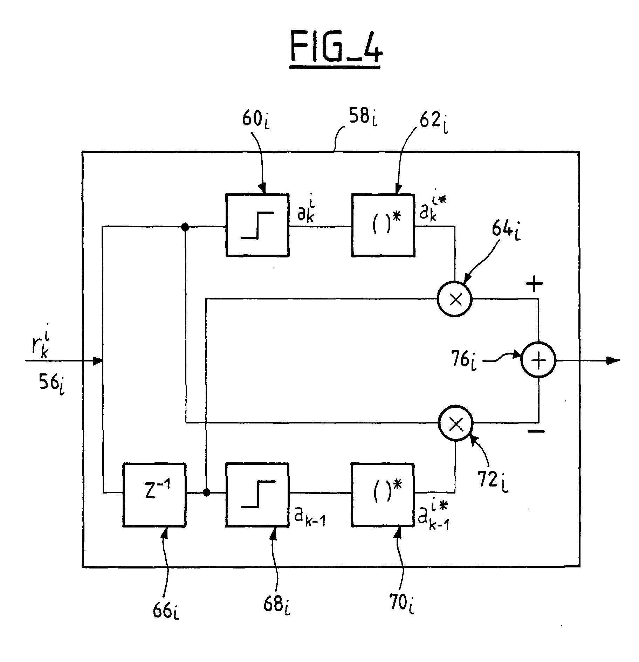

The principle of multicarrier transmission will be explained with reference to figures 1a, 1b, 1c and 2.

In figure 1a, an information sequence is having several binary information bits is represented. For the m-th frame, the two most significant bits form a symbol $S_1$ which is transmitted with carrier frequency $f_1$, the three following bits form a symbol $S_2$ which is transmitted with carrier frequency $f_2$, and the two least significant bits form a symbol $S_3$ which is transmitted with carrier frequency $f_3$. On figure 1a, the symbols $S_1$, $S_2$ and $S_3$ are represented with the usual diagrams in the complex plane, these symbols being represented by circles. The black dots in the complex plane represent the other possible values to be transmitted. In other words, the complete constellation of values which it is possible to transmit are represented, i.e. 4 points for 2 bits and 8 points for 3 bits.

The symbols $S_1$, $S_2$ and $S_3$ modulate the corresponding carrier in amplitude and/or in phase.

Figure 2 represents a modulator, a demodulator and a transmission channel. More precisely, figure 2 shows that the modulator comprises an IFFT module 11, i.e. a module providing the inverse fast Fourier transform of the carriers $f_1$, $f_2$, $f_3$ modulated by the symbols $S_1$, $S_2$ and $S_3$. The parallel outputs of IFFT module 11 are provided to inputs of a parallel/serial converter 12. The signals are transmitted in series through a discrete equivalent channel 17 (comprising the actual channel 13) to a receiving part comprising a demodulator including a serial/parallel converter 14, a FFT (fast Fourier transform) module 15 receiving the parallel outputs from the converter 14, and providing signals to a frequency equaliser module 16 which presents outputs on which appear the demodulated symbols $S_1$, $S_2$ and $S_3$.

The discrete equivalent channel 17 is represented on figure 2a. It comprises, in addition to the channel 13 itself, on the transmission side, a digital to analog converter 18, a transmission filter 19, corresponding to the impulse response of the transmitter filter, and on the receiving side, a filter 21 corresponding to the impulse response of the receiver filter, and an analog to digital converter 23.

As illustrated by figure 1b, the three symbols $S_1$, $S_2$, $S_3$ are converted in continuous-time signals that are transmitted simultaneously during a time NT. The starting points of transmission of symbols $S_1$, $S_2$, $S_3$ are the same and the end points of transmission of symbols $S_1$, $S_2$ and $S_3$ appear also at the same time instant.

The four analogs signals $a_0$, $a_1$, $a_2$ and $a_3$ ($a_1$, $a_2$ and $a_3$ corresponding to carrier frequencies $f_1$, $f_2$ and $f_3$) provided by the IFFT module, which are transmitted simultaneously, appear as a signal $a_s$ on figure 1b.

Figure 1c shows the variations with time of the (useful) signals at the outputs of the FFT module, assuming an ideal channel. More precisely, for the signal at the i-th FFT output (i = 1,2,3), only the complex valued contribution of the i-th carrier is shown, the contribution of the intercarrier interference to the signal being not shown. Re $(FFT_i)$ means the real part of complex signal $(FFT_i)$ and Im $(FFT_i)$ means the imaginary part of complex signal $(FFT_i)$.

T0 is the optimal sampling instant at the receiver. As shown, at time T0, Re $(FFT_1)$ has a value +2 and Im $(FFT_1)$ has also a value +2. These values correspond to symbol $S_1$. At this time T0, Re $(FFT_2)$ has the value -2 and Im $(FFT_2)$ has the value -1 which correspond to symbol $S_2$ and Re $(FFT_3)$ has the value +2 and Im $(FFT_3)$ has the value -2 which correspond to symbol $S_3$.

T1 is the timing instant at the receiver when a timing error e= T1-T0 occurs. The synchronizer makes use of the FFT signals at time instants T2=T1-NT and T3=T1+NT to extract the estimated timing error.

The invention is based on the use of a Mueller and Müller synchroniser, at least for one of the tones or carriers.

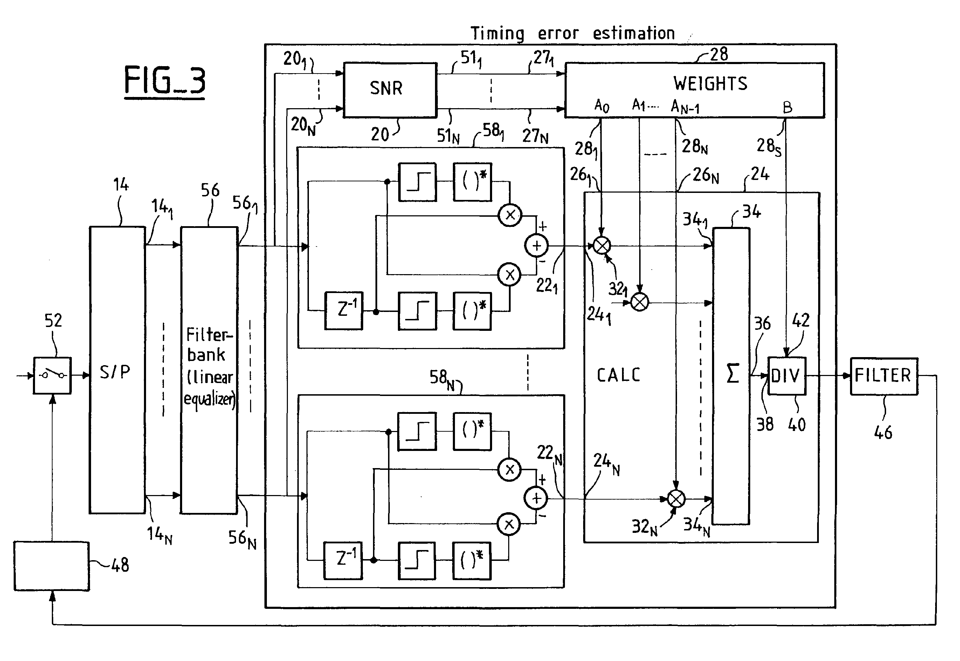

In the preferred embodiment which is represented on figure 3, use is made of a Mueller and Müller error estimation for each carrier.

As shown on figure 3, the multicarrier, or discrete multitone, signal which is received is sampled by an analog to digital converter 52 and applied to the input of the series/parallel converter 14 which has a number of outputs $14_1$, $14_2$, ..., $14_N$ equal to the number of tones of the multicarrier signal. These parallel signals are applied to a filter bank 56 which realizes a linear equalization of the received single tones. Each single tone at the output $56_1$, ..., $56_N$ of the filter bank 56 is applied to the input of a corresponding Mueller and Müller module $58_i$ and to the input $20_i$ of a signal to noise ratio (SNR) estimator 20.

Each module $58_i$, which will be described later in more details, has an output $22_i$ which is connected to a corresponding input $24_i$ of a calculation module 24.

This calculation module 24 has parallel inputs $26_1$, ..., $26_N$ which are connected to corresponding outputs $28_1$, ..., $28_N$ of a module 28 assigning weights to the values provided on the outputs of modules $58_i$.

These weights provided by module 28 depend on the signal to noise ratio on the corresponding channel.

More precisely, the block 20 which determines the signal to noise ratio of each channel has (in the represented example) outputs $51_i$ which are connected to corresponding inputs $27_i$ of module 28 and this signal to noise ratio of each channel is provided on the corresponding output $28_1$, ..., $28_N$ multiplied with a weight which depends on the carrier.

For each carrier, the calculation module 24 has a multiplier $32_i$ which multiplies the signal provided at the output $22_i$ of module $58_i$ by the weighting coefficient provided at the corresponding output $28_i$ of the weighting module 28.

The output of the multiplier $32_i$ is applied to an input $34_i$ of an adder 34. The adder 34 has an output 36 which is connected to the numerator input 38 of a divider 40 having a denominator input 42 connected to an output $28_S$ of the weighting module 28.

The signal provided on input 42 is the square root of the sum of the square values of the weighting coefficients $A_1$, ..., $A_N$ provided on outputs $28_1$, ..., $28_N$.

The normalized signal provided on the output of divider 40 is applied to the input of an averaging filter 46 and the output of this averaging filter is the signal which is used for the correction of a timing unit or sampling clock 48 which is used for the analog to digital conversion.

Each module $58_i$ performs the following calculation:

$$e_i = r^i_{k-1} a^{i*}_k - r^i_k a^{i*}_{k-1} \qquad (2)$$

In this formula, $a^i_k$ is the single tone symbol corresponding to carrier i at time t, $r^i_k$ is the symbol measured at same time t and which differs from the symbol $a^i_k$ because of the timing error. $a^i_{k-1}$ and $r^i_{k-1}$ represent, respectively, the actual symbol and the measured symbol at time t-NT.

In order to obtain this value $e_i$, each module $58_i$ (figure 4) receives on its input the signal $r^i_k$ and has a first branch comprising a decision circuit $60_i$ which determines $a^i_k$ in view of $r^i_k$, this decision module being followed by a complex conjugate circuit $62_i$ which provides $a^{i*}_k$.

The output $a^{i*}_k$ of circuit $62_i$ is provided to the first input of a multiplier $64_i$ having a second input connected to the output of a delay circuit $66_i$ of duration NT receiving on its input the signal $r^i_k$ and providing, therefore, on its output the signal $r^i_{k-1}$ (due to the delay NT). This delay circuit $66_i$ is followed also by another decision circuit $68_i$ providing on its output the symbol $a^i_{k-1}$.

A circuit $70_i$ transforms the value $a^i_{k-1}$ into its complex conjugate value and the output of this circuit $70_i$ is connected to the first input of a multiplier $72_i$ having a second input receiving the signal $r^i_k$ from the output $56_i$ of filter bank 56. The outputs of the multipliers $64_i$ and $72_i$ are connected to the respective inputs of an adder $76_i$ which performs the calculation of formula (2) above.

## Claims

1. A reception arrangement for receiving multicarrier symbols, each multicarrier symbol ($S_1$, $S_2$, $S_3$) comprising a plurality of single carrier symbols, each single carrier symbol modulating a respective carrier frequency ($f_1$, $f_2$, $f_3$), these single carrier symbols being transmitted simultaneously, the reception arrangement comprising means for detecting the time, or phase error, of at least one single carrier and means for correcting the phase of a sampling clock in view of the estimated timing error,

   wherein the means for estimating the timing or phase error comprise, at least for one carrier, means ($58_1$ ... $58_N$, 24, 40) for determining a parameter $\hat{e}_i$ for a carrier $f_i$, or a quantity proportional to the parameter $\hat{e}_i$, according to the following formula:

$$\hat{e}_i = \alpha E \left[ r^i_{k-1} a^{i*}_k - r^i_k a^{i*}_{k-1} \right] \qquad (3)$$

   wherein $r^i_k$ is the detected signal for the single carrier at a time t, $a^i_k$ is the corresponding single carrier symbol at the same time t, $a_{k-1}^i$ and $r_{k-1}^i$ correspond, respectively, to $a_k^i$ and $r_k^i$ at time t-NT, NT being the duration of transmission of a multicarrier symbol, and E[] means an average value on several successive symbols.

2. A reception arrangement according to claim 1, comprising means for calculating the parameters $\hat{e}_i$ for all the carriers, and means (34) for adding the values of $\hat{e}_i$ parameters.

3. A reception arrangement according to claim 2, comprising means (28) for assigning to each value $\hat{e}_i$ a weighting coefficient which depends on the quality of the transmission of the corresponding channel for the carrier.

4. A reception arrangement according to claim 3, wherein the weighting coefficient is a function of the signal to noise ratio (SNR) of the corresponding transmission channel of the single carrier.

5. A method for estimating the timing error of a received digital multicarrier signal comprising a plurality of symbols which are transmitted simultaneously at different frequencies during a given time NT, wherein the error is estimated, at least for one of the single carriers ($f_i$), according to the following formula:

$$\hat{e}_t = E\left[ r_{k-1}^i a_k^{i*} - r_k^i a_{k-1}^{i*} \right] \qquad (3)$$

wherein $r_k^i$ is the detected signal for the single carrier at a time t, $a_k^i$ is the corresponding single carrier symbol at the same time t, $a_{k-1}^i$ and $r_{k-1}^i$ correspond, respectively, to $a_k^i$ and $r_k^i$ at time t-NT, NT being the duration of transmission of a multicarrier symbol, and E[] means an average value on several successive symbols.

6. A method according to claim 5, wherein the timing error is estimated by the calculation of the paramater $\hat{e}_i$ for all the single carriers, the multicarrier timing error signal being a weighted average of the values of said $\hat{e}_i$ parameters.

7. A method according to claim 6, wherein the weighting coefficient assigned to each parameter $\hat{e}_i$ or $e_i$ is a function of the quality of transmission of the corresponding single carrier channel.

8. A method according to claim 7, wherein the weighting coefficient of each of the quantities $\hat{e}_i$, or $e_i$, is a function of the signal to noise ratio of the corresponding transmission channel.

# FIG_1a

Information sequence $\langle$ 110110 | 0 0 1 1 0 0 1 | 1 1 0 1 0 1 1 | 1 0 1 $\rangle$ ← IS

frame m — frame m+1

Symbol constellations

$S_1$

$S_2$

$S_3$

Transmitted on carrier:

$f_1$

$f_2$

$f_3$

EP 1 221 794 A1

# FIG_1b

# FIG_1c

EP 1 221 794 A1

## FIG_2

IFFT — 11

P / S — 12

$S_1$, $S_2$, $S_3$

DISCRETE EQUIVALENT CHANNEL — 17

S / P — 14

FFT — 15

16

## FIG_2a

DAC — 18 (Tx clock)

p(t) — Tx filter — 19

ch(t) — Channel — 13

r(t) — Rx filter — 21

ADC — 23 (Rx clock)

# FIG_4

FIG_3

Timing error estimation

**European Patent Office**

# EUROPEAN SEARCH REPORT

**Application Number**

EP 01 40 0024

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | KAMMEYER K D ET AL: "SYNCHRONISATIONSPROBLEME IN DIGITALEN MULTITRAGERSYSTEMEN SYNCHRONIZATION PROBLEMS IN DIGITAL MULTICARRIER SYSTEMS" FREQUENZ,SCHIELE UND SCHON GMBH, vol. 47, no. 5/06, 1 May 1993 (1993-05-01), pages 159-166, XP000368759 BERLIN, DE ISSN: 0016-1136 * page 164 - page 165 *; Section 4 | 1,2,5 | H04L27/26 |
| Y | | 3,4,6-8 | |
| X | ULRICH TUISEL: "Multiträgerkonzepte für die digitale, terrestrische Hörrundfunkübertragung" DOCTORAL DISSERTATION, TECHNICAL UNIVERSITY OF HAMBURG-HARBURG, 1993, XP002170974 Hamburg-Harburg, Germany * page 112 * * page 116 - page 117 * * page 121 - page 123 * | 1,2,5 | |
| | | | TECHNICAL FIELDS SEARCHED (Int.Cl.7) |
| | | | H04L |
| Y | | 3,4,6-8 | |
| X | DE 43 15 806 A (BOSCH GMBH ROBERT) 17 November 1994 (1994-11-17) * column 3, line 14 - line 35 * * column 3, line 54 - line 66 * * claim 1 * | 1,2,5 | |
| Y | | 3,4,6-8 | |
| | -/-- | | |

The present search report has been drawn up for all claims

| Place of search | Date of completion of the search | Examiner |
|---|---|---|
| THE HAGUE | 2 July 2001 | Koukourlis, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 1 221 794 A1

**European Patent Office**

## EUROPEAN SEARCH REPORT

**Application Number**

EP 01 40 0024

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | MUELLER K H ET AL: "TIMING RECOVERY IN DIGITAL SYNCHRONOUS DATA RECEIVERS" IEEE TRANSACTIONS ON COMMUNICATIONS, vol. 24, no. 5, 1 May 1976 (1976-05-01), pages 516-531, XP000573328 NEW YORK, USA ISSN: 0090-6778 * page 517, right-hand column, paragraph 4 - paragraph 5 * * page 524 * | 1,2,5 | |
| Y | | 3,4,6-8 | |
| X | US 5 930 231 A (BORAZJANI RAMIN ET AL) 27 July 1999 (1999-07-27) * column 7, line 7 - line 26 * * column 27, line 51 - line 67 * * column 44, line 65 - column 47, line 27 * * figure 24 * | 1,2,5 | |
| Y | | 3,4,6-8 | |
| Y | EP 0 903 897 A (CIT ALCATEL) 24 March 1999 (1999-03-24) * paragraph '0024! - paragraph '0028! * * paragraph '0031! - paragraph '0032! * * figures 1-3 * | 3,4,6-8 | **TECHNICAL FIELDS SEARCHED (Int.Cl.7)** |
| A | POLLET T ET AL: "SYNCHRONIZATION WITH DMT MODULATION" IEEE COMMUNICATIONS MAGAZINE, vol. 37, no. 4, April 1999 (1999-04), pages 80-86, XP000823991 PISCATAWAY, N.J, USA ISSN: 0163-6804 * the whole document * | 1-8 | |

The present search report has been drawn up for all claims

| Place of search | Date of completion of the search | Examiner |
|---|---|---|
| THE HAGUE | 2 July 2001 | Koukourlis, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 40 0024

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2001

| Patent document cited in search report | | Publication date | Patent family member(s) | | Publication date |
|---|---|---|---|---|---|
| DE 4315806 | A | 17-11-1994 | NONE | | |
| US 5930231 | A | 27-07-1999 | US | 5719867 A | 17-02-1998 |
| | | | AU | 2554997 A | 17-10-1997 |
| | | | EP | 0890231 A | 13-01-1999 |
| | | | JP | 2000508137 T | 27-06-2000 |
| | | | WO | 9736390 A | 02-10-1997 |
| | | | AU | 6407196 A | 05-02-1997 |
| | | | EP | 0835563 A | 15-04-1998 |
| | | | JP | 11509697 T | 24-08-1999 |
| | | | WO | 9702671 A | 23-01-1997 |
| EP 0903897 | A | 24-03-1999 | AU | 8418798 A | 01-04-1999 |
| | | | DE | 29724208 U | 04-05-2000 |
| | | | JP | 11163816 A | 18-06-1999 |

For more details about this annex : see Official Journal of the European Patent Office, No. 12/82